Europäisches Patentamt

European Patent Office

Office européen des brevets

(19)

(11) Veröffentlichungsnummer : **0 411 294 B1**

# (12) EUROPÄISCHE PATENTSCHRIFT

(45) Veröffentlichungstag der Patentschrift :
**02.09.92 Patentblatt 92/36**

(51) Int. Cl.$^5$ : **F16H 33/00, // B60K6/06, B60K6/10**

(21) Anmeldenummer : **90111624.4**

(22) Anmeldetag : **20.06.90**

(54) **Fahrzeug- bzw.Geräte-Antriebseinrichtung.**

(30) Priorität : **01.08.89 DE 3925412**

(43) Veröffentlichungstag der Anmeldung :
**06.02.91 Patentblatt 91/06**

(45) Bekanntmachung des Hinweises auf die
Patenterteilung :
**02.09.92 Patentblatt 92/36**

(84) Benannte Vertragsstaaten :
**DE FR GB IT SE**

(56) Entgegenhaltungen :
**CH-A- 666 772**
**DE-A- 1 538 897**

(56) Entgegenhaltungen :
**DE-A- 2 347 661**
**DE-A- 2 519 090**
**DE-C- 2 904 572**
**US-A- 3 489 034**
**US-A- 3 686 973**

(73) Patentinhaber : **MAN Nutzfahrzeuge Aktiengesellschaft**
**Dachauer Strasse 667 Postfach 50 06 20**
**W-8000 München 50 (DE)**

(72) Erfinder : **Hagin, Faust, Dipl-Ing.**
**Poccistrasse 2**
**W-8000 München 2 (DE)**
Erfinder : **Drewitz, Hans**
**Agnesstrasse 59**
**W-8000 München 40 (DE)**

## Beschreibung

Die Erfindung betrifft eine Fahrzeug- bzw. Geräte-Antriebseinrichtung mit einem Antriebsmotor, Getriebe und Schwungrad.

Als Beispiel für eine solche Antriebseinrichtung sei jene gemäß der DE-C-29 04 572 angegeben. Diese besteht aus einem Antriebsmotor, einem hydrostatisch-mechanischen Leistungsverzweigungsgetriebe und einem Schwungrad, das als Gyrospeicher einen Teil einer Bremsenergie-Rückgewinnungseinrichtung bildet. Der mechanische Wirkungsgrad sowohl des Getriebes als auch des Schwungrades hängt unter anderem auch von der Höhe der Ventilationsverluste der rotierenden Teile ab. Um diese Ventilationsverluste zu reduzieren, ist es bekannt, Schwungräder in abgedichteten und evakuierten bzw. mit Leichtgas gefüllten Gehäusen unterzubringen. Solche hermetisch gegenüber der Atmosphäre abgedichteten Schwungradgehäuse haben jedoch eine Reihe von Nachteilen. Die Abdichtungen zwischen der Schwungradwelle und dem Schwungradgehäuse sind defektanfällig und verursachen Reibungsverluste. Im Schwungradgehäuse können sich aufgrund der Lager- und Dichtungsarbeit, aber auch wegen der Ventilationsverluste des Schwungrades problematische Wärmestauungen ergeben. Bei Ausfall der Dichtungen oder der Vakuumpumpe besteht außerdem eine ernsthafte Gefahr des Fressens und Festsetzens der Schwungradlager verbunden mit einer nachfolgenden Schwungrad-Überhitzung und -Materialausdehnung.

Es ist daher Aufgabe der Erfindung, eine Antriebseinrichtung der eingangs genannten Art so auszugestalten, daß die Reibungs- bzw. Ventilationsverluste verringerbar sind und gleichzeitig die Betriebssicherheit der Antriebseinrichtung gegenüber bisherigem Zustand verbesserbar ist.

Diese Aufgabe ist erfindungsgemäß durch eine Antriebseinrichtung mit den im Anspruch 1 gekennzeichneten Merkmalen gelöst.

Infolge der Abdichtung sowohl des Getriebe- als auch Schwungrad-Gehäuses nach außen und deren Füllung mit Leichtgas wie Helium, verbunden mit einer Regelung, die den Druck der Leichtgasfüllung ständig geringfügig, z.B. 0,001 bar über dem Atmosphärendruck hält, ist eine nennenswerte Reduzierung der Ventilationsverluste der rotierenden Teile der Antriebseinrichtung, soweit sie im Getriebe- bzw. Schwungradgehäuse untergebracht sind, erzielbar. Bedingt durch die kanalmäßige Kommunikation zwischen Getriebe-Gehäuse und Schwungrad-Gehäuse sind Wärmestauungen in letzterem auch bei hochtourig drehendem Schwungrad sicher vermeidbar. Insgesamt ergibt sich somit durch die erfindungsgemäße Lösung eine erhebliche Verbesserung der Betriebssicherheit der Antriebseinrichtung.

Vorteilhafte Einzelheiten der erfindungsgemäßen Antriebseinrichtung sind in den Unteransprüchen angegeben.

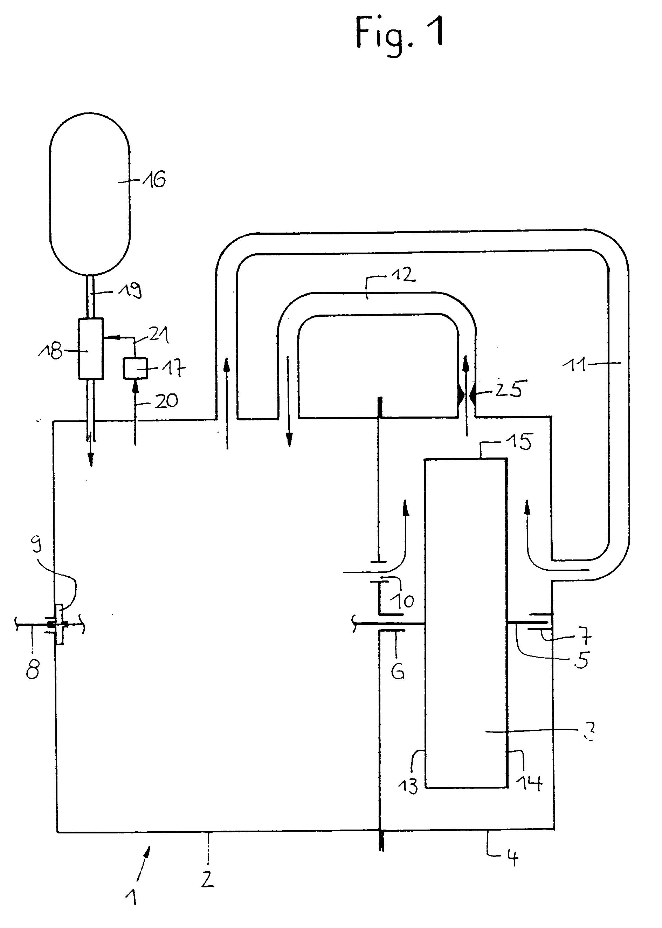

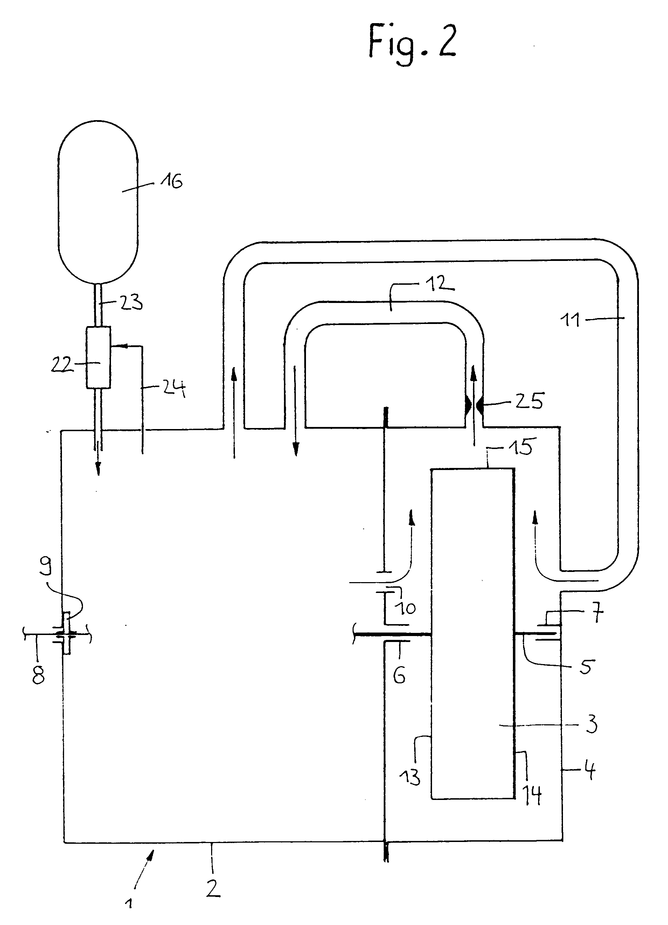

Nachstehend ist die erfindungsgemäße Lösung anhand zweier in Fig. 1 und Fig. 2 der Zeichnung dargestellter Ausführungsbeispiele näher erläutert.

In beiden Figuren ist die erfindungsgemäße Antriebseinrichtung weitestgehend schematisiert und nur in jenen Teilen dargestellt, die für das Verständnis der Erfindung notwendig sind. Die Antriebseinrichtung besteht aus einem nicht dargestellten Antriebsmotor, z.B. einer Brennkraftmaschine oder einem Elektromotor, ferner einem Getriebe 1 mit Gehäuse 2 und einem Schwungrad 3 mit Gehäuse 4. Vorzugsweise sind die beiden Gehäuse 2 und 4 direkt aneinander angrenzend miteinander verbunden. Das Schwungrad 3 ist mit seiner Achse 5 beiderseits in gehäusefesten Lagern 6, 7 gelagert. Bei dem Getriebe 1 kann es sich um ein herkömmliches mechanisches Schaltgetriebe, ein Planetendifferentialgetriebe, ein Summier-, Wechsel- oder dergleichen Getriebe handeln. Die nur schematisch als Stummel dargestellte Abtriebswelle des Getriebes 1 ist mit 8 bezeichnet. An dieser ist beispielsweise ein Achsantriebsstrang eines Fahrzeuges oder der Antriebsstrang eines Gerätes angeschlossen. Auf eine zeichnerische Darstellung des mechanischen Teiles des Getriebes 1, ebenso auf Art und Ort der Krafteinleitung vom Antriebsmotor in das Getriebe 1 ist verzichtet worden, weil für das Verständnis der Erfindung nicht notwendig.

Entsprechend der Lehre der Erfindung sind die Gehäuse 2, 4 des Getriebes 1 und Schwungrades 3 gegenüber der umgebenden Atmosphäre weitgehend abgedichtet und mit Leichtgas, z.B. Helium gefüllt. Außerdem wird diese Leichtgasfüllung ständig auf einem geringfügig, z.B. 0,001 bar über dem außerhalb herrschenden Atmosphärendruck gehalten. Letzteres deshalb, um sicherzustellen, daß keine Luft aus der Atmosphäre in den Innenraum der Gehäuse 2, 4 gelangen kann. In den Figuren ist nur eine der besagten Dichtungen, mit denen die Gehäuse 2, 4 nach außen abgedichtet sind, schematisch dargestellt und mit 9 bezeichnet. Des weiteren stehen entsprechend der Lehre der Erfindung die Innenräume der Gehäuse 2, 4 von Getriebe 1 und Schwungrad 3 über Verbindungskanäle 10, 11 und 12 miteinander in Kommunikation. Dabei bilden die beiden Verbindungskanäle 10, 11 Zufuhrkanäle, mit denen Leichtgas aus dem Getriebe-Gehäuse 2 in das Schwungrad-Gehäuse 4 über- und in letzteres jeweils vor einer der beiden Stirnseiten 13, 14 des Schwungrades 3 eingeleitet wird, und zwar in Richtung der dargestellten Pfeile, um einen jeweils einen Druckausgleich zwischen den Innenräumen der beiden Gehäuse 2, 4 herzustellen. Bei dem Verbindungskanal 12 handelt es sich um eine Rückleitung, die vom Schwungrad-Gehäuse 4 vorzugsweise im Bereich vor der Umfangsfläche 15 des Schwungrades 3 abzweigt und an beliebiger Stelle des Getriebe-Gehäuses 2 angeschlossen ist und erwärmtes Leichtgas in Richtung des eingetragenen Pfeiles aus dem Schwungrad-Gehäuse 4 in den Innenraum des Getriebe-Gehäuses 2 rückführt. In den Verbindungskanal 12 ist eine Drossel 25 eingebaut, die eine zu starke Ausgleichsströmung zwischen den beiden Gehäusen 2, 4 verhindert bzw. die Aufrechterhaltung eines bestimmten Überdruckes im Schwungrad-Gehäuse 4 sicherstellt.

Mit 16 ist ein Vorratsbehälter bezeichnet, in dem Leichtgas mit entsprechendem Überdruck abgespeichert ist. Darüber hinaus ist eine Einrichtung vorgesehen, mit der ständig bzw. in regelmäßigen Abständen der Druck des in den Gehäusen 2, 4 befindlichen Leichtgases gemessen und bei Erreichen bzw. Unterschreiten eines zulässigen Mindestüberdruckes eine Nachfüllung aus dem Leichtgas-Vorratsbehälter 16 ausgelöst wird. Im Fall gemäß Fig. 1 besteht die besagte Einrichtung aus einem Druckwächter 17, der den Innendruck im Getriebe- bzw. Schwungrad-Gehäuse 2 bzw. 4 erfaßt, und einem bei Erreichen bzw. Unterschreiten des zulässigen Mindestüberdruckes in den Gehäusen 2 bzw. 4 zur Umschaltung auf Durchlaß veranlaßten Absperrventil 18, das in eine vom Leichtgas-Vorratsbehälter 16 ins Innere des Getriebegehäuses 2 führende Speiseleitung 19 eingeschaltet ist. Der Druckwächter 17 erhält den im Innenraum des Gehäuses 2 herrschenden Druck von einem entsprechenden Sensor her oder direkt über ein Meßrohr entsprechend dem Pfeil 20 zugeführt. Die Steuerung des Absperrventiles 18 durch den Druckwächter 17 ist durch einen Pfeil 21 angedeutet.

Im Fall des Ausführungsbeispiels gemäß Fig. 2 besteht die besagte Einrichtung aus einem Druckregelventil 22, das in Abhängigkeit vom in den Gehäusen 2, 4 herrschenden, durch eine Einrichtung, z.B. einen Sensor erfaßten sowie über eine Meldeleitung 24 gemeldeten Druck von Absperrung auf Durchlaß geschaltet wird und ebenfalls in eine vom Leichtgas-Vorratsbehälter 16 ins Innere des Getriebe-Gehäuses 2 führende Speiseleitung 23 eingebaut ist. Da der im Inneren der Gehäuse 2, 4 gegenüber der äußeren Atmosphäre herrschende Überdruck relativ klein ist, beispielsweise 0,001 bar, ist in Verbindung mit den die Gehäuse 2, 4 abdichtenden Mitteln (Dichtungen 9) eine weitgehende Druckkonstanz im Getriebe-Gehäuse 2 und Schwungrad-Gehäuse 4 sichergestellt. Eine Druckminderung infolge von Leckagen aus den Innenräumen der Gehäuse 2, 4 erfolgt - wenn überhaupt - wegen des sehr geringen Überdruckes äußerst langsam. In der Regel ist erst nach Wochen eine erneute Leichtgas-Nachfüllung der Gehäuseinnenräume notwendig.

Auf diese Weise ist sichergestellt, daß die innerhalb der Gehäuse 2 und 4 gegebenen rotierenden Teile der Antriebseinrichtung ventilationsverlustarm und reibungsarm laufen.

## Patentansprüche

1. Fahrzeug- bzw. Geräte-Antriebseinrichtung mit einem Antriebsmotor, Getriebe (1) und Schwungrad (3), dadurch gekennzeichnet, daß die Innenräume der Gehäuse (2, 4) des Getriebes (1) und Schwungrades (3) gegenüber der umgebenden Atmosphäre weitgehend abgedichtet sowie mit Leichtgas wie Helium, dessen Druck ständig geringfügig, z.B. um 0,001 bar, über Atmosphärendruck gehalten wird, gefüllt sind und über Verbindungskanäle (10, 11, 12) miteinander in Kommunikation stehen.

2. Antriebseinrichtung nach Anspruch 1, dadurch gekennzeichnet, daß durch eine Einrichtung ständig bzw. in regelmäßigen Abständen der Druck des im Getriebe- und Schwungradgehäuse (2, 4) befindlichen Leichtgases gemessen und bei Erreichen bzw. Unterschreiten eines zulässigen Mindestüberdruckes eine Leichtgas-Nachfüllung aus einem unter höherem Überdruck stehenden Leichtgas-Vorratsbehälter (16) ausgelöst wird.

3. Antriebseinrichtung nach Anspruch 2, dadurch gekennzeichnet, daß besagte Einrichtung aus einem Druckwächter (17), der den Innendruck im Getriebe- bzw. Schwungrad-Gehäuse (2, 4) erfaßt, und einem vom Druckwächter (17) bei Erreichen bzw. Unterschreiten des zulässigen Mindestüberdruckes zur Umschaltung auf Durchlaß veranlaßten Absperrventil (18) besteht, das in eine vom Leichtgas-Vorratsbehälter (16) ins Innere des Getriebe-Gehäuses (2) führende Speiseleitung (19) eingeschaltet ist.

4. Antriebseinrichtung nach Anspruch 2, dadurch gekennzeichnet, daß besagte Einrichtung ein Druckregelventil (22) ist, das in Abhängigkeit vom im Getriebe-Gehäuse (2) herrschenden und erfaßten Druck von Absperrung auf Durchlaß geschaltet wird und in eine vom Leichtgas-Vorratsbehälter (16) ins Innere des Getriebe-Gehäuses (2) führende Speiseleitung (23) eingebaut ist.

5. Antriebseinrichtung nach Anspruch 1, dadurch gekennzeichnet, daß die Kommunikation zwischen den Innenräumen von Getriebe- und Schwungrad-Gehäuse (2, 4) über zwei Zufuhrkanäle (10,11), mit denen Leichtgas aus dem Getriebe-Gehäuse (2) ins Schwungrad-Gehäuse (4) über- und in letzteres jeweils vor einer der beiden Stirnseiten (13, 14) des Schwungrades (3) eingeleitet wird, sowie wenigstens eine vom Schwungrad-Gehäuse (4) im Bereich vor der Schwungrad-Umfangsfläche (15) abgehende und zum Getriebe-Gehäuse (2) führende Rückleitung (12) erfolgt.

6. Antriebseinrichtung nach Anspruch 5, dadurch gekennzeichnet, daß in die Rückleitung (12) eine Drossel (25) eingebaut ist, die eine zu starke Ausgleichsströmung verhindert bzw. die Aufrechterhaltung eines bestimmten Überdruckes im Schwungrad-Gehäuse (4) sicherstellt.

## Claims

1. A drive device vehicle or apparatus, having a drive motor, a transmission (1) and a flywheel (3), characterized in that the inner spaces of the housings (2, 4) of the transmission (1) and the flywheel (3) are substantially sealed off from the surrounding atmosphere and are filled with a light gas such as helium, the pressure of which is constantly kept slightly above atmospheric pressure, *e.g.* by 0·001 bar, and communicate with each other by way of connecting ducts (10, 11, 12).

2. A drive device according to Claim 1, characterized in that the pressure of the light gas present in the transmission and flywheel housings (2, 4) is measured continuously or at regular intervals by a device, and a topping-up with light gas from a light-gas storage tank (16) kept at a higher excess pressure is initiated when a permissible minimum excess pressure is reached or when the pressure falls therebelow.

3. A drive device according to Claim 2, characterized in that the said device comprises a pressure monitor (17), detecting the internal pressure in the transmission and flywheel housings (2, 4), and a stop valve (18) actuated by the pressure monitor (17) to switch over to allowing flow when the permissible minimum excess pressure is reached or when the pressure falls therebelow, the stop valve (18) being inserted in a feed line (19) leading from the light-gas storage tank (16) into the interior of the transmission housing (2).

4. A drive device according to Claim 2, characterized in that the said device is a pressure-regulating valve (22) which is switched from stopping to allowing flow as a function of the pressure detected prevailing in the transmission housing (2) and is fitted in a feed line (23) leading from the light-gas storage tank (16) into the interior of the transmission housing (2).

5. A drive device according to Claim 1, characterized in that the inner spaces of the transmission and flywheel housings (2, 4) communicate by way of two supply ducts (10, 11 ), by which light gas is conveyed from the transmission housing (2) into the flywheel housing (4) and is introduced into the latter in front of one of the two side faces (13, 14) of the flywheel (3) in each case, and at least one return line (12) leaving the flywheel housing (4) in the region in front of the peripheral edge (15) of the flywheel and leading to the transmission housing (2).

6. A drive device according to Claim 5, characterized in that a throttle (25) preventing an excessive equalization flow and ensuring the maintenance of a specific excess pressure in the flywheel housing (4) is fitted in the return line (12).

## Revendications

1) Dispositif d'entraînement de véhicule ou d'appareil comportant un moteur, une transmission (1) et un volant d'inertie (3), caractérisé en ce que l'intérieur des boîtiers (2, 4) de la transmission (1) et du volant d'inertie (3) sont dans une très large mesure rendus étanche par rapport à l'atmosphère ambiante et sont remplis de gaz léger tel que l'hélium à une pression constante légèrement supérieure à la pression atmosphérique (par exemple 0,001 bar) et communiquent par des canaux de liaison (10, 11, 12).

2) Dispositif d'entraînement selon la revendication 1, caractérisé en ce qu'une installation mesure en permanence ou à intervalles réguliers, la pression du gaz léger contenu dans le boîtier de transmission ou le boîtier du volant d'inertie (2, 4) et lorsque la pression atteint ou passe en dessous d'une pression minimale autorisée, un remplissage complémentaire de gaz léger est déclenché à partir du réservoir d'alimentation de gaz léger

EP 0 411 294 B1

(16) qui se trouve à une pression plus élevée.

3) Dispositif d'entraînement selon la revendication 2, caractérisé en ce que l'installation comprend un dispositif de contrôle de pression (17) qui détecte la pression intérieure du boîtier de la transmission ou du volant d'inertie (2, 4) et une vanne d'arrêt (18) mise en oeuvre par le dispositif de contrôle de pression (17) lorsqu'est atteinte ou dépassée vers le bas la pression minimale autorisée, et commutée en position passante, cette vanne étant montée dans une conduite d'alimentation (19) reliant le réservoir d'alimentation (16) de gaz léger à l'intérieur du boîtier (2) de la transmission.

4) Dispositif d'entraînement selon la revendication 2, caractérisé en ce que l'installation est une vanne de régulation de pression (22) qui, en fonction de la pression détectée régnant dans le boîtier (2) de la transmission, est commutée de son état fermé à son état ouvert et est montée dans la conduite d'alimentation (23) reliant le réservoir d'alimentation en gaz léger (16) à l'intérieur du boîtier (2) de la transmission.

5) Dispositif d'entraînement selon la revendication 1, caractérisé en ce que la communication entre les volumes intérieurs du boîtier de la transmission et du boîtier du volant d'inertie (2, 4) est assurée par deux canaux d'alimentation (10, 11) par lesquels du gaz léger peut passer du boîtier de transmission (2) dans le boîtier (4) du volant d'inertie et arriver dans ce dernier devant les deux faces frontales (13, 14) du volant d'inertie (3), ainsi que par au moins une conduite de retour (12) partant du boîtier (4) du volant d'inertie dans la zone située devant la surface périphérique (15) du volant d'inertie et conduisant au boîtier (2) de la transmission.

6) Dispositif d'entraînement selon la revendication 5, caractérisé par un organe d'étranglement (25) monté dans la conduite de retour (12) et qui évite un trop fort écoulement de compensation ou qui garantit le maintient d'une certaine surpression dans le boîtier (4) du volant d'inertie.

# Fig. 1

# Fig. 2